(19) Europäisches Patentamt / European Patent Office / Office européen des brevets

(11) **EP 1 862 780 A1**

(12) **EUROPEAN PATENT APPLICATION**
published in accordance with Art. 158(3) EPC

(43) Date of publication:
05.12.2007 Bulletin 2007/49

(51) Int Cl.:
*G01F 1/704* (2006.01)    *G01P 5/20* (2006.01)

(21) Application number: 05822705.9

(86) International application number:
PCT/JP2005/024074

(22) Date of filing: 28.12.2005

(87) International publication number:
WO 2006/100814 (28.09.2006 Gazette 2006/39)

(84) Designated Contracting States:
AT BE BG CH CY CZ DE DK EE ES FI FR GB GR HU IE IS IT LI LT LU LV MC NL PL PT RO SE SI SK TR

(30) Priority: 23.03.2005 JP 2005083784

(71) Applicant: OHM Electric Co., Ltd.
Hamamatsu-shi, Shizuoka 430-0906 (JP)

(72) Inventor: OKAZAKI, Tadao, OHM Electric Co., Ltd.
Inasa-gun, Shizuoka 431-1304 (JP)

(74) Representative: Winter, Brandl, Fürniss, Hübner Röss, Kaiser,
Polte Partnerschaft Patent- und Rechtsanwaltskanzlei
Bavariaring 10
80336 München (DE)

(54) **FLUIDIZED STATE OBSERVING DEVICE AND FLUIDIZED STATE OBSERVING METHOD**

(57) Based on the reality that even when a fluid is uniform and does not appear to produce scattered light there are no fluids that are actually homogeneous and in which particles with different properties do not exist, when laser light is made to pass through a translucent duct and condensed to extend in the length direction in an axial core area of a predetermined region of the transmission path, image pickup can be performed by the CCD line sensor 42 as a result of scattered light being produced by particles with different properties in the axial core area, and a velocity component that uses a spatial filter can be computed by performing a predetermined operation. Hence, the average flow rate and flow volume and so forth can be determined on the basis of the laminar flow in the translucent duct 10.

Fig. 1

**Description**

The present invention relates to a fluidized state observing device and a fluidized state observing method.

In recent years, the excess supply of lubricating oil has been identified as an issue posed to zero emission activities in machining plants and there exists a need for robust measurement tools with a resolution on the order of $10\mu$L (liters)/h for the purpose of quantitatively grasping and managing the amount of lubricating oil.
It has previously been possible to meet such a need by establishing a minute flow path in order to attempt an increase in the flow rate and measuring the duct resistance as a pressure difference.

However, with the conventional technique mentioned above, because correction of the fluid viscosity that fluctuates markedly with respect to temperature is necessary and there is a danger of the flow path being blocked, the technique is confined to the experimental device stage and does not satisfy requirements for FA (Factory Automation) site measurement tools. Further, the supply of a minute flow volume is generally implemented by intermittently driving a driving element such as a diaphragm or valve or the like in a pump or the like. There has also been the problem that the fluidized state of a fluid of a minute volume is complex and observation of this fluidized state is difficult.
The present invention was conceived in view of the above problem and an object of the present invention is to provide a fluidized state observing device and fluidized state observing method that allow the need for measurement tools at FA sites to be satisfied.

In order to achieve the above object, the invention according to claim 1 is a fluidized state observing device for observing a fluidized state of a fluid flowing in a duct, comprising: a translucent duct; projection light irradiation means for irradiating projection light; projection light condensing means for condensing the projection light along a length direction with respect to an axial core area of the translucent duct; and axial core image pickup means for picking up images of scattered reflected light from an axial core area of the translucent duct cyclically while contrast-enhancing the scattered reflected light in predetermined positions in the length direction.

In the case of the invention according to claim 1 that is constituted as described above, when the projection light irradiation means irradiate projection light on the translucent duct, projection light irradiation means condense the projection light, along the length direction, on the axial core area of the translucent duct. Even when the measurement target is a transparent liquid such as lubricating oil, the reality is that the measurement target is not completely devoid of particles with different optical properties and the particles with different optical properties that flow together with the lubricating oil cause the projection light to be scattered in the axial core area as a result of the projection light being condensed with respect to the axial core area. Furthermore, in the case of an unsaturated fluid such as a mist that is mixed with an air, the unsaturated fluid corresponds to the particles with different optical properties in the air and can bring about scattering of the projection light.

As a result of scattered light being reflected by the optical heterogeneous particles, axial core image pickup means that execute image pickup perform photography in cycles while contrast-enhancing reflected light from the axial core area of the transparent duct in predetermined positions in the length direction. Thus, the positions of the particles with different optical properties which change with the flow of the fluid can be grasped as image positions of the scattered light in the image pickup images. Hence, the fluidized state of the fluid can be grasped on the basis of the image pickup images. Even in cases where the fluid flows intermittently and the movement of the fluid is complex, the fluidized state can be grasped in minute detail by finely setting the time cycle for picking up the image pickup images. Hence, it is possible to easily grasp the particular fluidized state of the fluid in accordance with the drive timing of the respective pumps or other drive elements and it is possible to perform optimization of the drive timing and so forth of the drive elements.

Furthermore, in the invention according to claim 2, the projection light irradiation means is constituted comprising computation means for calculating a flow rate of the fluid on the basis of the image pickup images picked up by the axial core image pickup means.
In the invention according to claim 2 with the above constitution, computation means are provided and the computation means calculate the flow rate of the fluid on the basis of the image pickup images at a plurality of times that are picked up by the axial core image pickup means. With the image pickup images at the plurality of times, the displacement of the particles with different optical properties between the respective times can be grasped and, by dividing the displacement by time, the velocity of the particles with different optical properties can be specified. In cases where frictional drag between the particles with different optical properties and the fluid is large, the velocity of the particles with different optical properties can be considered to match the flow rate of the fluid. Hence, the flow rate of the fluid can be calculated. Furthermore, in the case of an unsaturated fluid such as a mist that is mixed with an air, because the unsaturated fluid corresponds to the particles with different optical properties in the air, the flow rate of the unsaturated fluid can be obtained.

Furthermore, in the invention according to claim 3, the fluid is a saturated fluid that flows in the duct and the flow volume of the saturated fluid is calculated on the basis of the flow rate and a cross-sectional area of the duct.
In the case of the invention of claim 3 which has such a constitution, when the fluid flowing in the duct is a saturated fluid, because the duct is full of the fluid, the volume flow per unit of time can be calculated by multiplying the cross-sectional area of the duct by the flow rate.

Further, in the invention according to claim 4, the fluid is an unsaturated fluid that flows in the duct and the flow volume of the unsaturated fluid is calculated on the basis of the flow rate and an attenuation of the transmitted light that is transmitted via the translucent duct.

In the case of the invention of claim 4 which has such a constitution, when the fluid flowing in the duct is an unsaturated fluid, the duct is not full of the fluid. Hence, there is a need to consider the density of the unsaturated fluid in the duct in order to calculate the flow volume. The higher the density of the unsaturated fluid in the duct, the larger the attenuation of the transmitted light transmitted via the translucent duct. Therefore, the density of the unsaturated fluid can be estimated from the attenuation. The volume flow per unit of time of the unsaturated fluid can be calculated on the basis of the flow rate and the density thus estimated.

In addition, in the invention according to claim 5, the constitution is such that the fluid is an unsaturated fluid that flows in the duct and the flow volume of the unsaturated fluid is calculated on the basis of the flow rate and the scattered light amount scattered by the translucent duct.

In the case of the invention of claim 5 which has such a constitution, the higher the density of the unsaturated fluid in the duct, the larger the scattered light amount scattered by the translucent duct. Hence, the density of the unsaturated fluid can be estimated from the scattered light amount. The volume flow per unit of time of the unsaturated fluid can be calculated on the basis of the density thus estimated and the flow rate.

Furthermore, in the invention according to claim 6, the constitution is such that the projection light irradiation means comprises a semiconductor laser and a PWM (Pulse Width Modulation) control circuit that controls an output of the semiconductor laser.

The extent of the scatter varies depending on the particles with different optical properties. Naturally, the transmittance of the measurement target also varies. Hence, the amount of light that is sufficient to pick up images of particles with different optical properties differs according to the objective and the environment. In addition, the amount of light is excessive or deficient depending on the frequency when image pickup is cyclically performed. In that sense also, means that are highly responsive and allow the amount of light to be adjusted are required.

In the case of the invention of claim 6 which has such a constitution, the projection light irradiation means is implemented by the semiconductor laser comprising the PWM control circuit and the responsiveness and light amount required for the measurement of the flow rate in the duct can be estimated.

In addition, in the invention according to claim 7, the constitution is such that the axial core image pickup means comprises a CCD(Charge Coupled Device) line sensor.

For applying the spatial frequency filter, the measurement target can be widened by image-processing the image pickup images. This is because the spatial frequency filter has a grating pitch as a computation element and a difference in the computing performance is produced depending on whether the grating pitch is fixed or variable. In that sense, the width of the computing performance is widened depending on whether data that can be image-processed can be acquired as a prerequisite for being able to virtually vary the grating pitch.

Furthermore, in the invention according to claim 8, the constitution is such that the computation means applies a spatial frequency filter to the image pickup images picked up by the CCD line sensor.

In the case of the invention of claim 8 which has such a constitution, image pickup is implemented by means of a CCD line sensor; the CCD line sensor is able to perform image pickup in the axial core direction and, because there is no other component, the computation can be simplified and is suitable for the provision of data assuming image processing of the kind mentioned above because grayscales are held for each of the image pickup elements (pixels).

In addition, in the invention according to claim 9, the constitution is such that the computation means applies a predeterminedweighting function to outputs of the respective image pickup elements of the CCD line sensor.

In the case of the invention of claim 9 which has such a constitution, the grating pitch of the spatial filter can be changed virtually by applying a predetermined weighting function to the output of the respective image pickup images of the CCD line sensor.

In addition, in the invention according to claim 10, the constitution is such that the computation means applies a sine function as the weighting function.

In the invention according to claim 11, the constitution is such that the computation means applies a rectangular wave function as the weighting function.

In the case of the invention of claim 10 or 11 which has such a constitution, the stability when the special frequency is extracted can be increased by applying the weighting function.

In addition, in the invention according to claim 12, the constitution is such that image pickup is performed by mixing particles of different optical properties that increase the reflected light of the projection light with the fluid.

The measurement target itself in which there are no particles with different optical properties is inconceivable in the natural world. However, other than the image pickup of particles with different optical properties being essential, there are advantages in achieving simpler image pickup. In the case of the invention according to claim 12 the constitution of which was described above, because particles with different optical properties that increase the reflected light of the projection light are mixed with the fluid, the image pickup of the particles with different optical properties is more reliable. Micro bubbles, for example, are suitable for use as these particles with different optical properties.

In addition, the invention according to claim 13 is constituted such that the axial core image pickup means is disposed in a direction in which a reflected light component from the translucent duct is large.

As a result of the properties of the duct and liquid and so forth, there are also cases where directional dependence is produced in the reflected light from the translucent duct. For this reason, in the case of the invention of claim 13 which has such a constitution, reliable image pickup of particles with different optical properties is made possible by disposing the axial core image pickup means in the direction in which the reflected light component from the translucent duct is large.

Furthermore, in the invention according to claim 14, the constitution is the fluidized state observing device further comprises output means for outputting an image in which the image pickup images of each time cycle of the axial core image pickup means canbe compared. In the case of the invention of claim 14 which has such a constitution, output means is provided and the output means outputs an image in which the image pickup images of each time cycle of the axial core image pickup means can be compared. Thus, the progress of the displacement of the particles with different optical properties can be visually grasped on a monitor or printed page or the like, for example. Further, because the image pickup images picked up in temporal cycles are output so that same can be compared, it is possible to easily identify the temporal displacement.

In the invention according to claim 15, the constitution is such that the computation means further comprises: spatial frequency analysis means for acquiring image pickup images picked up by the CCD line sensor that are picked up at different times and for acquiring a spatial frequency spectral that relates to the axial core direction of the image pickup images while moving the image pickup images relatively in the axial core direction; and flow rate calculationmeans for calculating the flow rate of the fluid on the basis of the relative movement amount of the image pickup images when a correlation between the image pickup images and the spatial frequency spectral is strengthened.

In the case of the invention of claim 15 which has such a constitution, the spatial frequency analysis means are provided in the computation means and the spatial frequency analysis means acquires image pickup images picked up by the CCD line sensor that are picked up at different times. The spatial frequency analysis means then acquires a spatial frequency spectral that pertains to the axial core direction of the image pickup images while moving the image pickup images picked up at different times relatively in the axial core direction. Further, the flow rate calculation means finds a correlation between the image pickup images picked up at different times and the spatial frequency spectral and specifies a relative movement amount in the axial core direction of the image pickup images so that the correlation is strong. The flow rate calculation means then calculates the flow rate of the fluid on the basis of the relative movement amount.

The particles with different optical properties in the fluid can be considered to undergo a translation without a change in the relative position of the particles with di f ferent optical properties being effected. Hence, although the image pickup images picked up at different times undergo a positional displacement with respect to the axial core direction, the spatial frequency characteristics thereof can be considered asapproximate. The correlation between the spatial frequency characteristics becomes very high as a result of effecting a relative movement of the image pickup images so that the amounts by which the particles with different optical properties move between the different times are cancelled out. Hence, the amount by which the particles with different optical properties move between the different times can be specified by calculating the spatial frequency spectral after the image pickup images has undergone a relative movement, finding the correlation, and specifying the relative movement amount for which the correlation is high.

Furthermore, in the invention of claim 16, the constitution is such that the spatial frequency analysis means adds a window function obtained by shifting the relative position in the axial core direction with respect to the image pickup images.

In the case of the invention of claim 16 which has such a constitution, the spatial frequency spectral for which the relative position in the axial core direction has been displaced can be calculated by adding the window function obtained by shifting the relative position in the axial core direction with respect to the image pickup images.

In addition, in the invention according to claim 17, the constitution is such that the spatial frequency analysis means applies a sine function as the window function.

In the case of the invention of claim 17 which has such a constitution, a sine function can be applied as the window function.

Furthermore, in the invention according to claim 18, the constitution is such that the fluid is an unsaturated fluid that flows in the duct and the flow volume of the unsaturated fluid is estimated on the basis of an index value obtained by adding together a value obtained by integrating the intensity of the spatial frequency spectral and the spatial frequency, and the flow rate.

In the case of the invention of claim 18 which has such a constitution, the sum total of the reflected light sensed by the line sensor can be calculated by integrating the intensity of the spatial frequency spectral with respect to all the spatial frequencies. Because it can be said that the density of the unsaturated fluid of the particles with different optical properties in the duct rises as the sum total of the reflected light increases, an index for estimated the flow volume of the unsaturated fluid can be obtained by dividing the sum total by the flow rate.

Thus, a technique that condenses the irradiation light on the axial core of the transparent duct and observes the fluidized state by performing image pickup on the axial core area cyclically in the length direction is not necessarily limited to material devices. Functions can also be easily understood with this method. For this reason, the invention of claim 19 is a fluidized state observing method for observing the fluidized state of a fluid flowing in a duct, comprising the steps of condensing projection light at the axial core of the translucent duct; and performing image pickup on the axial core area cyclically in the length direction.

That is, the above technique is not necessarily limited to material devices and there is no difference in the efficacy of this method.

Further, there are also instances where the fluidized state observing device exists independently or where same is used incorporated in a certain instrument or the like. The idea of the invention is not limited to such forms and includes a variety of forms. Hence, the invention can be software or hardware or the like and can be suitably modified.

When, as a concrete example of the concept of the invention, the invention is the software of a fluidized state observing device, it goes without saying that the software may naturally exist and be used recorded on a recording medium.

Naturally, the recording medium may be a magnetic recording medium or a magneto-optic recording medium and all kinds of recording media that will be developed going forward can also be considered. Further, the same is also true for stages of duplication such as primary copies or secondary copies. The present invention may also be used in cases where a supply method is carried out using a communication line.

In addition, the concept of the invention is no different for cases where part of the invention is implemented by software and part by hardware. An aspect in which part is stored on a recording medium and suitably read if necessary is also conceivable.

When the present invention is implemented by software, a constitution where hardware and an operating system and so forth are used is possible or same can be implemented separately. For example, as possible kinds of computation processing, if the implementation method is also capable of calling up and processing a predetermined function in an operating system, the predetermined function can also be input by hardware without calling up the function. Further, even when the predetermined function is actually implemented with the intervention of the operating system, in the process of recording the program on a medium and distributing same, it is clear that the present invention can be implemented simply by the program.

Furthermore, when the present invention is implemented by software, not only can the invention be implemented as a medium for recording a program but naturally also as the program itself. The program itself is therefore included in the present invention.

As described hereinabove, the present invention is capable of providing a fluidized state observing device capable of observing a fluidized state even in the case of a minute flow volume and an intermittent flow.

According to claim 2, the flow rate of the fluid can be obtained.

According to claim 3, the flow volume of a saturated fluid can be obtained.

According to claims 4 and 5, the flow volume in a pneumatic conveying duct that conveys minute particles such as atomized particles which are an unsaturated fluid can be obtained.

According to claim 6, a fluidized state observing device capable of accurate measurement by means of the required intensity and the high-speed responsiveness can be provided.

According to claim 7, a hard spatial filter can be implemented by a line sensor.

According to the inventions of claims 8 to 11, a fluidized state observing device capable of accurate measurement by varying the grating pitch of the spatial frequency filter virtually can be provided.

According to claims 12 and 13, a fluidized state observing device capable of accurate measurement by means of reliable image pickup particles with different optical properties can be provided.

According to claim 14, the fluidized state can be evaluated visually.

According to claim 15, the flow rate can be specified accurately.

According to claim 16 or 17, the correlation between the image pickup images for each position can be judged.

According to claim 18, the flow volume of a pneumatic circulating duct of minute particles such as atomized particles which constitute an unsaturated fluid can be obtained.

According to claim 19, a fluidized state observing method that affords the same results can be provided.

Fig. 1 is a schematic diagram of a fluidized state observing device according to an embodiment of the present invention;

Fig. 2 is a schematic diagram of when the fluidized state observing device is viewed from a different viewpoint;

Fig. 3 shows the disposition of the coordinate axis of a translucent duct;

Fig. 4 shows the velocity distribution of the laminar flow in the translucent duct;

Fig. 5 shows the application of a weighting coefficient to the output signal of a CCD line sensor;

Fig. 6 is a schematic constitutional view of the fluidized state observing device of a third embodiment;

Fig. 7 shows an output example of image pickup images which are arranged to permit a comparison;

Fig. 8 is a constitutional view of the essential parts of the fluidized state observing device of a fourth embodiment;

Fig. 9 shows an aspect in which the image pickup images are moved;

Fig. 10 is a graph showing a spatial frequency spectral; and

Fig. 11 is a graph showing a correlation coefficient.

Embodiments of the present invention will be described hereinbelow in the following order:

(1) First embodiment:
(2) Second embodiment:
(3) Third embodiment:
(3) Fourth embodiment:
(4) Summary:

(1) First embodiment

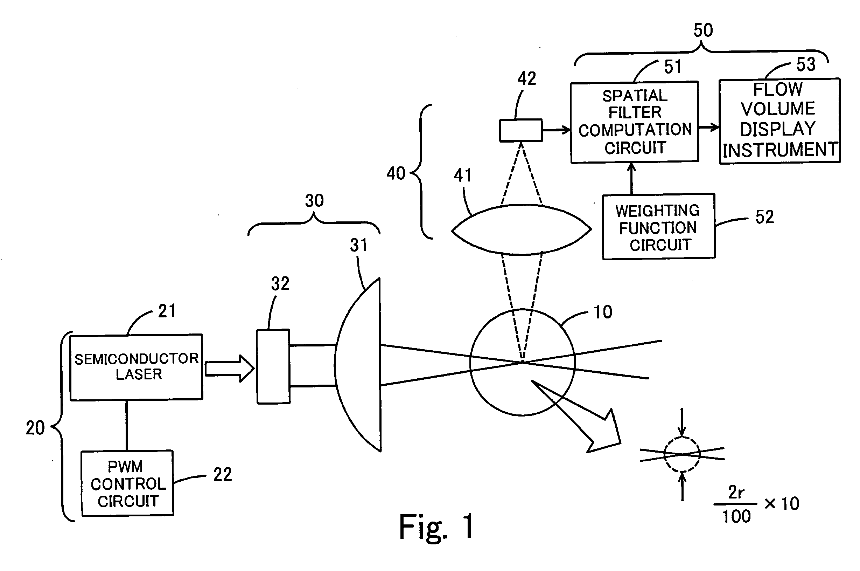

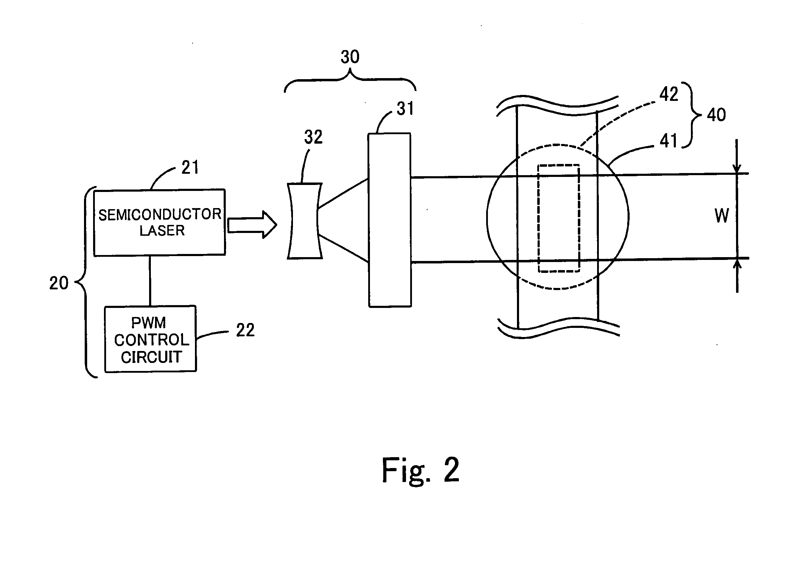

A first embodiment of the present invention will be described hereinbelow based on the drawings. Figs. 1 and 2 provide schematic views of a fluidized state observing device of the first embodiment of the present invention. Fig. 1 shows the disposition state of the duct as viewed from the axial core direction and shows the disposition state as viewed from a direction orthogonal to the axial core of the duct. The translucent duct 10 is made of transparent glass and is translucent and therefore constitutes a translucent duct. The translucency corresponds to the quality and wavelength of the projection light but there is not necessarily a need for translucency to the naked eye. The whole of the duct can be covered as long as the required optical path is secured.

The semiconductor laser 21 projects laser light of a predetermined intensity as a result of a driving power supply being supplied by a PWM control circuit 22. Hence, projected light irradiating means 20 is constituted by the semiconductor laser 21 and the PWM control circuit 22. The semiconductor laser 21 is constituted by a diode laser and an optional light amount can be created while providing high-responsiveness by the PWM control circuit 22 that controls the composition ratio between the light emission time and the light extinction time. The translucent duct 10 has a translucent function with respect to the laser of the semiconductor laser 21.

A first optical system 30 comprises a cylinder lens 31, a concave lens 32 and a convex lens that is not illustrated. This first optical system 30 forms an optical path to condense light as an axial core while expanding the projection light irradiated by the semiconductor laser 21 along the axial core direction with respect to the translucent duct 10. In other words, the laser is condensed as an axial core and transmitted over a fixed length of the translucent duct 10. This means that the first optical system 30 constitutes projection light condensing means. Here, axial core' indicates substantially 10% of the diameter as will be described subsequently. The aim of the axial core will be described subsequently.

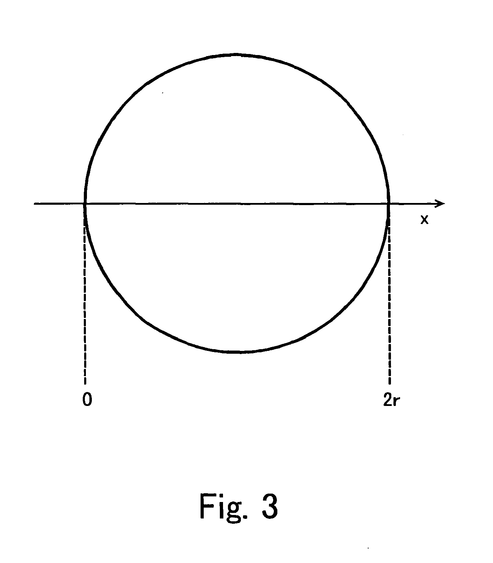

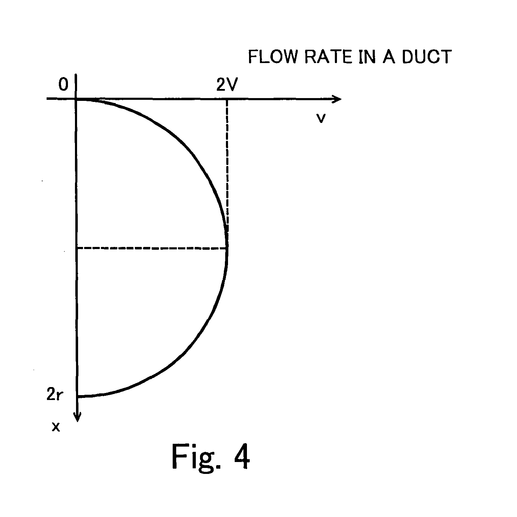

Fig. 3 shows the relationship between the flow rate and position in the translucent duct 10. Fig. 4 shows the method of measuring the position in the translucent duct 10. Now, when a coordinate axis that extends from one inside wall (0) to the opposite inside wall (2r) is formed so as to pass through the center of the translucent duct 10 of radius r as shown in Fig. 4, the flow rate of the respective coordinate positions is 0 to 2V (V is the average flow rate) as shown in Fig. 3 in the case of laminar flow within the translucent duct 10. The range in which the flow rate is from 2V to 1.98V, that is, a range within 1%, is a range of approximately 10% with respect to the shaft diameter (diameter) (a range of diameter 2r/100) . An average flow rate V is determined with practical accuracy by measuring the flow rate in an axial position within this range of approximately 10%. Hence, the range of the axial core to be condensed by the first optical system 30 is a range of approximately 10% that includes the axial center in which the flow rate of the laminar flow is stabile. Naturally, the range to be condensed in accordance with the accuracy thus determined can be changed.

On the other hand, the length (W) of expansion along the axial core direction changes depending on the type of parameters. The parameters are the flow rate and the resolution of the image pickup means and so forth. When the laser passes through the translucent duct 10, a second optical system 41 is an optical system for performing photography by providing an image of an aspect rendered through the scattering of particles having different optical properties in the axial core area on a CCD line sensor 42 which is an image pickup element. Naturally, the optical axis of the projection light projected by the first optical system 30 and the optical axis of the second optical system 41 do not coincide and a target that is imaged by the second optical system 41 is not present unless there is no scattered light.

. The CCD line sensor 42 is a line sensor in which CCDs are disposed in a row within a predetermined range. The CCD line sensor 42 outputs electric charge that corresponds to the irradiated light amount. An image of the axial core area of the translucent duct 10 is provided on the respective cells of the CCD line sensor 42 by the second optical system 41 and, when light amounts are obtained on the basis of the output signal of the CCD line sensor 42, an image of the same axial core area can be reproduced. The image of the axial core area is used to obtain a flow rate component on the basis of a spatial frequency filter. Hence, the use of other image pickup elements that achieve this object is also possible. Further, axial imaging means 40 that performs image pickup in cycles while contrast-enhancing the reflected light from the axial core area of the translucent duct 10 in predetermined positions in the length direction by means of the second optical system 41 and CCD line sensor 42.

The output signal of the CCD line sensor 42 is input to a spatial filter computation circuit 51. Generally, the computation of the flow rate component that uses a spatial filter is performed by using the following equa-

tions:

$$F=mV1/p1$$

V1=p1·F/m (where V1 is the velocity, p1 is the pitch of the spatial filter, and m is the optical imaging amplification).

The spatial filter provides spatial frequency selectivity and the CCD line sensor 42 that comprises photocells with a predetermined pitch satisfies the conditions for establishing the narrowband spatial filter. Accordingly, the relative velocity V1 can be determined on the basis of the pitch and the frequency signal of the CCD line sensor 42.

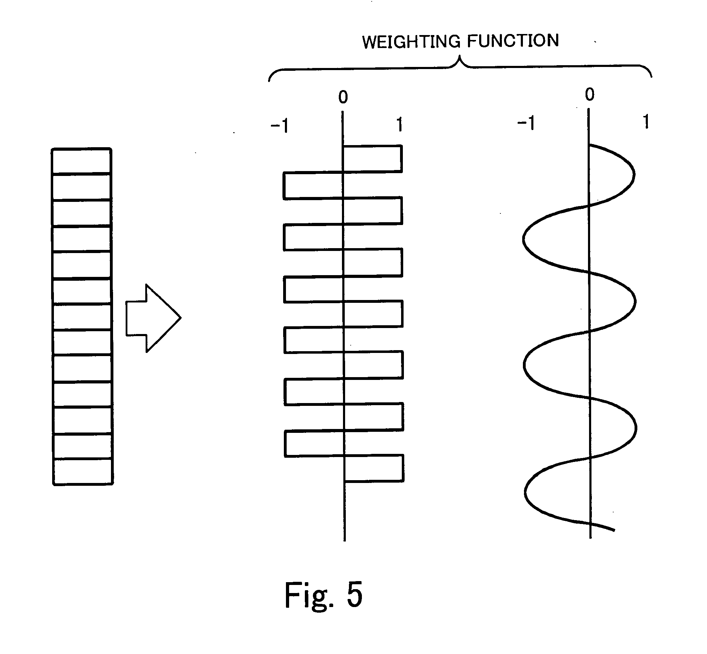

The CCD line sensor 42 has a fixed pitch. However, because the output signals of the CCD line sensor 42 each correspond to independent light amounts for each cell, the characteristics of the spatial filter can be varied by superimposing a weighting function shown in Fig. 5 on the output signal. Hence, by producing weighting functions that are adapted to the measurement target and measurement environment of the weighting function circuit 52, the range of the measurement target can be freely expanded. Naturally, the spatial frequency selectivity corresponding with the state can also be provided by applying the Hanning function or the like.

The spatial filter computation circuit 51 establishes a predetermined photography cycle and successively obtains the output signals of the CCD line sensor 42. Computation source data are obtained as a progression of the values of the output signals at the respective timings and superimposed as a preset weighting function on the computation source data (multiplied thereby). Post-computation data are then obtained as a time series from values rendered by performing integration in predetermined sections on the respective products of the multiplication. Because the post-computation data are functional values for which an increase is repeated with a predetermined cycle, a velocity component is determined by multiplying the pitch and the inverse of the imaging magnification with this frequency.

In the case of an infinitesimal flow volume to an ultra-low velocity flow to which the present invention is directed, the frequency in the above description is very low. Hence, in a conventional technique that simply performs addition, a very long addition time is required and the technique is not practical. Therefore, in this specification, a shortening of the addition time can be implemented by establishing a plurality of weighting functions the phases of which are shifted by equal amounts by extending the zero crossing points to fixed intervals and adding, with the zero crossing points for multiple function groups extended to fixed intervals values chronologically for each weighting function, values that are computed for each weighting function for the output of the CCD cells. Alternatively, frequency values can be obtained for each practical time as a result of measuring the cycles of the zero crossing points thus found.

The velocity component determined by the spatial filter computation circuit 51 is two times (2V) the average velocity and a flow volume display instrument 53 multiplies the predetermined cross-sectional area of the translucent duct 10 by the average velocity V and finds and displays the flow volume per unit time.

The spatial filter computation means 50 are constituted by the spatial filter computation circuit 51 that executes the computation processing of the output signals of the CCD line sensor 42, the weighting function circuit 52, and the flow volume display instrument 53. Naturally, the flow volume display instrument 53 is not required as far as finding only the velocity component goes.

The operation of this embodiment with the above constitution will be described next.

Suppose that a liquid such as machine lubricant, for example for which the flow rate is to be measured is flowing through a predetermined duct. By interposing the translucent duct 10 in the same duct, the same machine lubricant passes through the translucent duct 10. Essentially, the machine lubricant comprises a uniform translucent component and particles do not exist. Therefore, at first glance, the machine lubricant is only a colorless or light-colored transparent liquid.

The semiconductor laser 21 repeatedly turns ON and OFF at the ON and OFF times set by the PWM control circuit 22 and emits laser light which amounts to a predetermined light amount overall. The laser light enters the first optical system 30 where it is extended to assume a width W in the axial core direction of the translucent duct 10 and condensed to pass through the center of the translucent duct 10 at this width before being emitted.

The laser light passes through the machine lubricant that flows inside the translucent duct 10. Normally, there is a tendency to consider that scattered light will not be produced even when laser light passes through the machine lubricant that is supposed to be uniformly transparent. However, it is, conversely, rare that particles with different optical properties will be entirely non-existent; scattered light is produced by a small quantity of particles with different optical properties. The direction component of the scattered light is random. However, there are also many instances where the light emission source of the laser light has a larger amount of scattered light on average than in the direction of transmittance of the laser light. Hence, the optical axis of the second optical system 41 may be established at an acute angle (less than 90 degrees) to the optical axis of the first optical system 30 depending on the amount of light.

The scattered light produced by the particles of different optical properties that exist in the translucent duct 10 also enters the second optical system 41 and an image of the axial core of the translucent duct 10 is provided on the CCD line sensor 42 by the second optical system 41.

Electric charge is deposited on each cell in accordance with the amount of light formed on the CCD line sensor 42. Here, the spatial filter is established as a narrowband spatial filter in accordance with the disposition of each cell. The spatial filter computation circuit 51 acquires the output signals of the CCD line sensor 42 at each predetermined time. The output signals of the CCD line sensor 42 thus correspond to an image rendered to which a spatial filter is applied to produce the computation source data. Although the frequency thereof may be obtained as is, because the flow rate is slow, the frequency obtained should be amplified by multiplying by a sine function with a frequency that corresponds with the amplification ratio applied a spatial phase difference.

Further, by performing sequential integration within a predetermined range on signal values that correspond with output signals which are input chronologically, representative values for the respective time series are found. The representative values are computed data and the frequencies represented by the computed data are superimposed signals that correspond to the multiplier. By dividing the spatial frequency thus determined by the multiplier, the spatial filter computation circuit 51 determines the average velocity V. Naturally, the spatial filter computation circuit 51 is also capable of the task of finding the frequency by means of a frequency analysis technique such as the commonly known FFT with respect to a time-series computed data array.

The flow volume display instrument 53 then multiplies the average velocity V by the cross-sectional area of the translucent duct 10 and displays the flow rate per unit of time. In the above embodiment, particles with different optical properties need not be mixed with the machine lubricant which is the target of measurement and measurement is performed only by means of particles with different optical properties that exist naturally. Although the required scattered light is obtained by means of particles with different optical properties, the scattered light is insufficient when the amount of light of the semiconductor laser 21 is inadequate or when the translucency of the machine lubricant is low. Furthermore, in some instances, the noise component is large due to the inadequacy of the amount of light and the measurement accuracy does not satisfy the required accuracy. In such a case, it is sufficient to mix particles with different optical properties for which there is no fundamental drop inperformance with the machine lubricant. Minute air bubbles may be given as a suitable example of this type of particles with different optical properties. The minute air bubbles do not have different components added thereto and are suitable for the present invention which requires scattered reflected light due to their long residual time.

That is, scattered light is readily produced by implementing a pseudo increase in the amount of particles with different optical properties and image pickup by the axial core pickup means is straightforward and the SN ratio of the image can be increased. Thus, based on the reality that even when a fluid is uniform and does not appear to produce scattered light, there are no fluids that are actually homogeneous and in which particles with different properties do not exist, when laser light is made to pass through a translucent duct and condensed to extend in the length direction in an axial core area of a predetermined region of the transmission path, image pickup can be performed by the CCD line sensor 42 as a result of scattered light being produced by particles with different properties in the axial core area and a velocity component that uses a spatial filter can be computed by performing a predetermined operation. Hence, the average flow rate and flow volume and so forth can be determined on the basis of the laminar flow in the translucent duct 10.

In the above process, the flow volume is calculated with respect to the saturated flow with which the fluid fills the duct and the flow volume is found by multiplying the average flow rate thus determined by the cross-sectional area. In contrast, when the flow volume of an unsaturated fluid having multiple flows of atomized oil particles in an air is specified, the fluid volume per unit length cannot be specified by only the cross-sectional area.

However, by finding the density per unit length separately, the flow volume can be also obtained for the unsaturated fluid if the average flow rate is multiplied by the density of the fluid. For example, when the density of the oil particles exposed in the fluid is measured, the unsaturated fluid flowing in the translucent duct 10 is trapped at predetermined times and, by measuring the weight and volume and so forth of the trapped oil, the density of the oil particles can be measured. Further, in instances where the atomization rate when the oil particles are atomized in the air is specified, the density of the oil particles can also be specified from the atomization rate. The flow volume of the unsaturated fluid flowing in the translucent duct 10 can also be calculated by multiplying the density of the unsaturated fluid obtained as detailed above by the average flow rate.

(2) Second embodiment:

With the embodiment above, because there is the possibility that the density will fluctuate at the point where the unsaturated fluid flowing in the translucent duct 10 is trapped and at the point where the flow rate is measured, when the density of the unsaturated fluid is unstable, the correct flow volume cannot be measured. Further, there are many cases where the atomization rate does not stabilize and there has been the problem that it is difficult to estimate the exact density at the point where the exact flow rate is measured from the atomization rate. Therefore, in the second embodiment, the above problem is solved by measuring the density of the unsaturated fluid at the same time as measuring the flow rate of the unsaturated fluid flowing in the translucent duct 10.

In the present invention, laser light is irradiated by the semiconductor laser 21 onto the translucent duct 10 and the density of the unsaturated fluid can be measured in real time by using the laser light. For example, when oil particles that have been atomized in the air are an unsaturated fluid, because the optical properties of the air and oil particles differ, the density can be measured by observing the laser light that passes through the translucent duct 10. The air can be considered to transmit the light substantially without reflecting the light and it can be said that, when the density of the oil particles is low, the amount of transmitted laser light increases. On the other hand, because the oil particles are opaque, it can be said that the amount of transmitted laser light is attenuated when the density of the oil particles is high. In addition, because the oil particles have a high refractive index than that of air, it can be said that the amount of scattered light resulting from the laser light being reflected by the oil particles increases when the density of the oil particles is high.

In other words, because it can be said that there is an unambiguous relationship between the amount of transmitted laser light (attenuation amount), the scatter light amount, and the density of the gas particles, by pre-examining this relationship, it is possible to obtain the density of the corresponding oil particles from the amount of transmitted laser light or the scattered light amount during flow rate measurement. Further, for detecting the transmitted light amount, it is sufficient to install a light intensity sensor like that of the CCD line sensor 42 on the optical axis of the semiconductor laser 21 so that laser light penetrating the translucent duct 10 can be received. If the amount of transmitted light is obtained, the amount of attenuation of the laser light in the translucent duct 10 can be obtained from the amount of light that is output of the original laser light. Further, because the CCD line sensor 42 is displaced from the optical axis of the semiconductor laser 21, the amount of scattered light can be detected by using the output signal of the CCD line sensor 42 and there is no need to add a new device. Irrespective of the technique used, because the density can be specified with the same timing as the timing for measuring the flow rate, the exact flow volume can be measured even when the atomization rate and density or the like are unstable.

(3) Third Embodiment:

Generally speaking, in cases where a minute flow volume is generated, because the pressure difference is excessive when the actuators are driven continuously, the actuators are operated intermittently. In such cases, the flow of the fluid is extremely complicated depending on the drive timing of each actuator. That is, in addition to the flow rate fluctuating over time, depending on the case, there is sometimes a counter current. In such a case, if the fluidized state can be grasped visually in addition to numerical values referring to the flow rate and flow volume, it is possible to accurately grasp the fluidized state of a fluid of a minute flow volume.

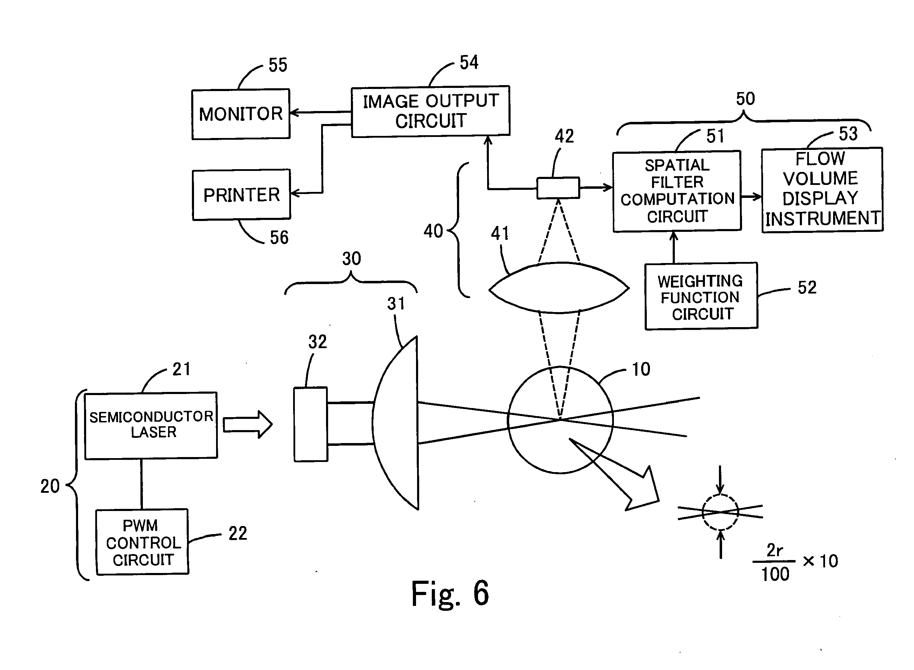

Fig. 6 shows a schematic constitution of a fluidized state observing device according to the third embodiment. In Fig. 6, an image output circuit 54 is additionally connected to the CCD line sensor 42 and the image output circuit 54 is connected to a monitor 55 and printer 56 that correspond to the outputmeans of the present invention. As detailed earlier, the output signals of the CCD line sensor 42 signify the image pickup images of the axial core area of the translucent duct 10 and respective pixels that are arranged in a line shape are one-dimensional image data that have brightness levels that correspond with the reflection light amounts reflected by particles of different optical properties that exist in the corresponding positions. The CCD line sensor 42 outputs one-dimensional image pickup data to the image output circuit 54. The image output circuit 54 comprises a memory (not illustrated) and sequentially stores the image data. The image output circuit 54 then outputs image data to each of the monitor 55 and printer 56 on the basis of the sequentially stored image pickup image data.

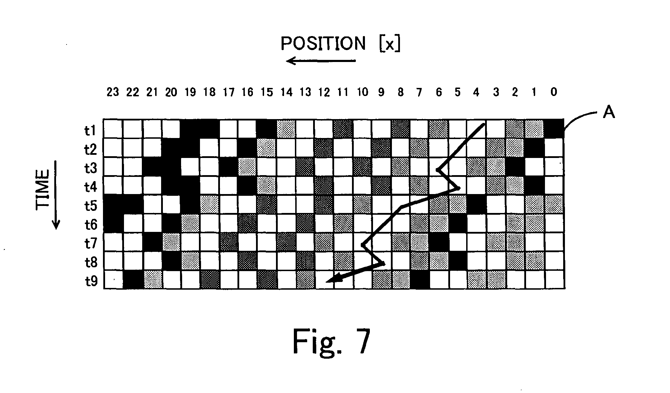

Fig. 7 shows a simplified example of an image that is output by the monitor 55 and printer 56. In Fig. 7, a rectangular image A is displayed; the vertical axis of image A represents time and the horizontal axis of image A represents the position (x) in the axial core direction of a pixel. Further, this means that, the lighter the pixel color is, the larger the light reception amount of the CCD element at the corresponding address and the thicker the pixel color is, the smaller the light reception amount of the CCD element at the corresponding address. Fig. 7 shows a simplified version of image A. In reality, an image at the resolution corresponding to the number of pixels of the CCD line sensor 42 is displayed.

In image A, one-dimensional images of the respective times that are sequentially output by the CCD line sensor 42 are arranged successively with time. In this kind of image A, when one time is considered, it is possible to visually grasp the fact that particles with different optical properties are distributed in particular positions in the axial core area of the translucent duct 10. In addition, by tracking dense pixels spanning a plurality of times, it is possible to visually grasp the positions of the particles with different optical properties as time elapses.

It can be seen from image A that particles with different optical properties move to the left in the axial core direction as time elapses. For example, when the locus of the dense pixels rises to the right, it can be said that particles with different optical properties are progressing from right to left at this time and, the smaller the gradient, the faster the flow rate is. Conversely, when the locus of the dense pixels falls to the right, it can be said that the particles with different optical properties are flowing in the reverse direction from left to right at this time. In Fig. 7, an aspect in which a fluid is temporarily flowing in the reverse direction is shown.

Further, because the frictional drag between the particles with different optical properties and the fluid medium is generally large, a plurality of particles with different optical properties are translated without there being a change in their position relative to one another. Thus, in the case of image A which is displayed such that image pickup images of a plurality of times can be compared, the fluidized state of the fluid in the translucent duct 10 can be visually grasped and it is easy to grasp the fluidized state even when same is complex. Therefore, optimization of the control timing and so forth of the actuator can also be performed. Further, in image A, the amounts of light received by the CCD elements may be expressed using gray scales or the image output circuit 54 may carry out binarization by applying a predetermined threshold value.

(3) Fourth Embodiment

In the first embodiment, it was possible to measure the flow rate and flow volume and so forth with favorable responsiveness and specify an instantaneous flow rate and flow volume at the respective times. However, in the case of an intermittent flow as shown in image A of Fig. 7, there was the problem that the flow rate became unstable and ripples had an adverse effect on the instantaneous flow rates and flow volumes. In other words, in the case of an intermittent flow for which the flow rate is unstable, the average flow rate and flow volume over a long period is preferably calculated when grasping the fluidized state. For example, it may be said that it is more important to obtain the average flow rate from time t1 to time t5 than the flow rate from time t1 to time t2 in image A of Fig. 7 after considering the total amount of fluid supplied.

The average flow rate from time t1 to time t5 can be obtained by dividing the distance (number of pixels) that the particles with different optical properties have moved from time t1 to time t5 by the time from time t1 to time t5 and applying the optical imaging magnification of the CCD line sensor 42. The distance (number of pixels) that the particles with different optical properties have moved from time t1 to time t5 is specified using the translational properties of the particles with different optical properties. The technique for calculating the distance that the particles with different optical properties have moved from time t1 to time t5 will be explained hereinbelow.

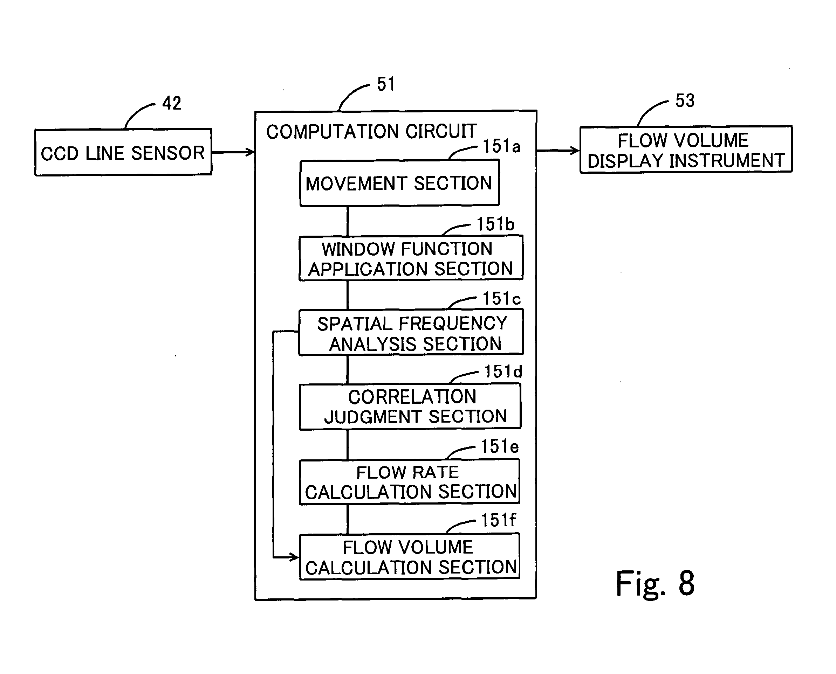

Fig. 8 shows a constitution for calculating the flow rate from the image pickup images picked up by the CCD line sensor 42. In Fig. 8, the computation circuit 51 obtains the image pickup images from the CCD line sensor 42. The computation circuit 151 replaces the spatial filter computation circuit 51 of the first embodiment and is constituted by a movement section 151a, a window function application section 151b, a spatial frequency analysis section 151c, a correlation judgment section 151d, a flow rate calculation section 151e, and a flow volume calculation section 151f. The movement section 151a, window function application section 151b, and spatial frequency analysis section 151c correspond to the spatial frequency analysis means of the present invention and the correlation judgment section 151d and flow rate calculation section 151e correspond to the flow rate calculation means of the present invention. First, the computation circuit 51 acquires the image pickup images picked up at different times and the image pickup times. For example, the computation circuit 51 acquires the respective image pickup images at times t1 and t5 in image A of Fig. 7.

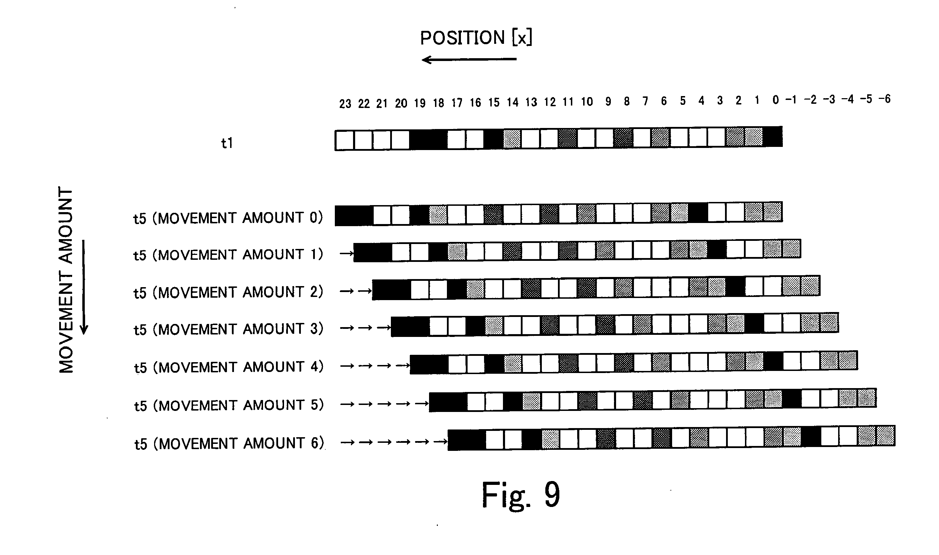

The movement section 151a shifts the image pickup images picked up at time t5 in the axial core direction. Fig. 9 schematically shows an aspect in which the movement section 151a shifts the image pickup images picked up at time t5 in the axial core direction. In Fig. 9, the image pickup images picked up at time t5 are shifted to the right of the page. In Fig. 9, image pickup images that have been moved with movement amounts of 0 to 6 pixels are illustrated. That is, when the movement amount is n pixels, the position x in the axial core direction of the horizontal axis is shifted to (x-n).

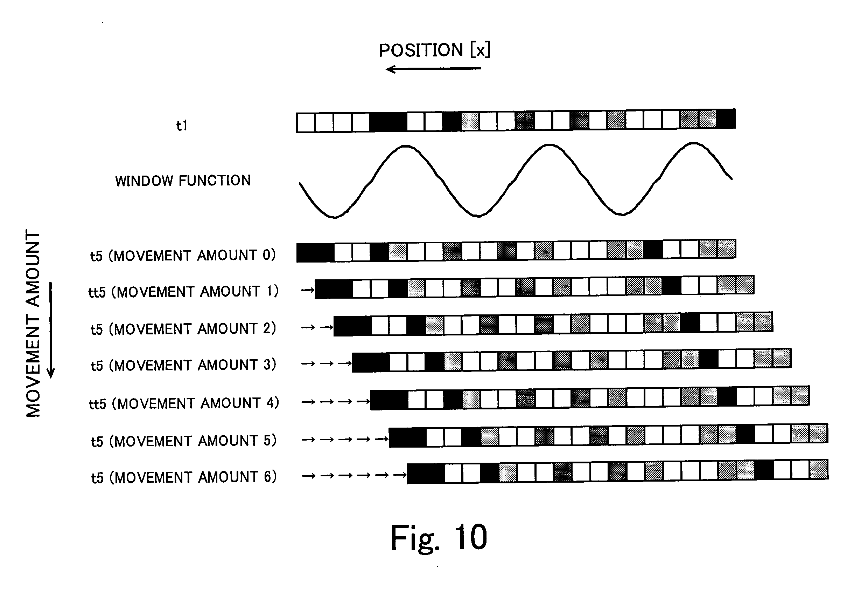

The window function application section 151b multiplies the image pickup images by a sine function as the window function. Fig. 10 shows a comparison between the window function and the respective pixel images. The window function M(x) shown in Fig. 10 can be expressed by the following equation:

$$M(x) = \sin\left(\frac{2\pi}{8} * x\right)$$

In other words, the window function M(x) is an 8-pixel cycle sine wave. Further, the window function M(x) is only an example and can be suitably changed in accordance with the resolution and so forth of the CCD line sensor 42. The window function application section 151b multiplies the brightness B (x) of each pixel by the window function M(x) . As a result, the brightness B(x) of each pixel is cyclically enhanced by the window function M(x).

The image pickup images picked up at time t5 is multiplied by the window function M (x) and an image pickup image enhanced by the window function M (x) is obtained. Likewise, the image pickup images picked up at time t5 that have been moved by the movement section 151a are also multiplied by the window function M (x), and enhanced image pickup images are obtained. However, because the image pickup images picked up at time t5 are moved by the movement section 151a, the relative phases in the axial core direction of the brightness B (x) and window function M(x) of each pixel are shifted and multiplied. Further, image pickup images and the window function M (x) for time t5 can also be moved relatively in the axial core direction and a plurality of window functions M(x) the initial phase angle of which is shiftedmaybe prepared multiplied by the brightness B(x) of the respective pixels at time t5. Further, the image pickup images at times t1 and t5 may be moved relatively in the axial core direction or the image pickup images at time t5 may be fixed and the image pickup images at time t1 may be moved.

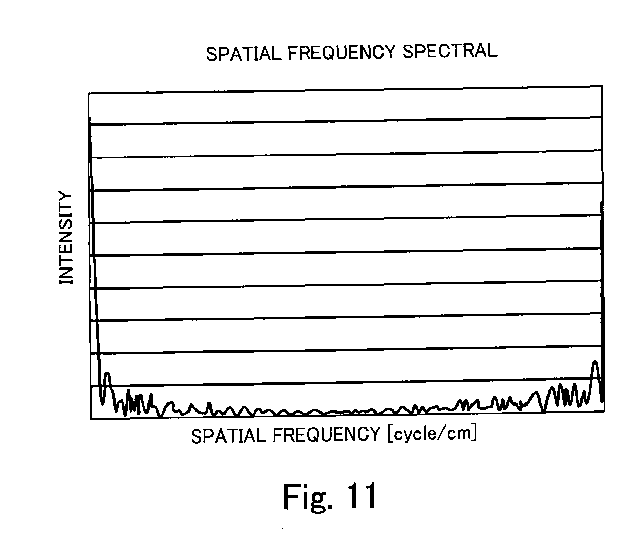

The spatial frequency analysis section 151c performs a high-speed Fourier transform (abbreviated as 'FFT' hereinbelow) with respect to image pickup images picked up at time t1 and enhanced by the window function M(x) . Fig. 11 shows a spatial frequency spectral of the image pickup images at time t1 that was obtained by the FFT transform. In Fig. 11, the horizontal axis represents the spatial frequency f and the vertical axis represents the intensity (corresponds to an integrated value of the amplitudes of the respective luminance waves). Further, Figs. 8 to 10 show a simplified version of the image pickup images. A variety of luminance waves can be sensed as shown in Fig. 11 at the actual resolution of the CCD line sensor 42.

The spatial frequency analysis section 151c performs an FFT transform on the respective image pickup images picked up at time t5 and enhanced by the window function M(x) the phase of which is displaced. As a result, a spatial frequency spectral can be obtained for the respective image pickup images picked up at time t5 and moved by 0 to 6 pixels. The correlation judgment section 151d evaluates the correlation between the spatial frequency spectral related to the image pickup images at time t1 and the spatial frequency spectral related to the respective image pickup images at time t5 (with movement amounts of 0 to 6 pixels). More specifically, the correlation coefficient W(XY) is calculated by means of the following equation:

$$W(XY) = FFT^{-1}\left| X(f) * Y(f)^* \right|$$

In the above equation, f is the spatial frequency and * represents a complex product. Further, X (f) is the intensity of the spatial frequency spectral of the image pickup images picked up at time t1 and Y(f)* represents the conjugate of the intensity of the spatial frequency spectrals of the image pickup images picked up at time t5 . Seven different correlation coefficients W(XY) are calculated using the equation above in correspondence with pixels of movement amounts 0 to 6. The correlation judgment section 151d detects the movement amount with the largest correlation coefficient W(XY) and outputs this movement amount to the flow rate calculation section 151e.

Here, the relative position of the window function M(x) fluctuates in accordance with the amounts by which the image pickup images picked up at time t5 are moved by the movement section 151a and spatial frequency spectrals of different inclinations are obtained in accordance with these movement amounts. Furthermore, because particles with different optical properties move to different positions as time elapses also for the image pickup images picked up at different times, a relative displacement with respect to the window function M (x) is produced and spatial frequency spectrals of essentially different inclinations are obtained. Hence, spatial frequency spectrals that are obtained from image pickup images picked up at times t1 and t5 also represent inclinations that are essentially different.

However, only in cases where the movement section 151a has moved the image pickup images at time t5 so that the distances by which the particles with different optical properties move between time t1 and time t5 cancel each other out, the positions in the axial core direction of the image pickup images of times t1 and t5 coincide and, as a result, the relative positions in the axial core direction with respect to the window function M (x) also coincide for both image pickup images. In this case, the spatial frequency spectrals obtained from the image pickup images of times t1 and t5 have the same inclination and represent a high correlation coefficient W (XY) . Fig. 10 shows that, when the image pickup images picked up at time t5 have been moved by four pixels, movement is performed such that the distances by which the particles with different optical properties move between times t1 and t5 cancel each other out and the brightness B (x) of each pixel has been similarly enhanced by the window function M(x). The relative movement amount for which the correlation coefficient W (XY) is highest as described earlier can be said to correspond to the distance by which the particles with different optical properties have moved between times t1 and t5.

When the movement amount for which the correlation function W(XY) between the spatial frequency spectrals of the image pickup images picked up at different times is largest is specified, the flow rate calculation section 151e that acquires this movement amount calculates the flow rate on the basis of the movement amount. As mentioned earlier, the movement amount for which the correlation function W(XY) is highest corresponds to the distance by which the particles with different optical properties have moved between times t1 and t5, the pixel movement amount per unit of time can be specified by dividing the distance by the time (t5-t1). Ultimately, the flow rate of the actual axial core can be obtained by dividing the pixel movement amount per unit of time by the optical imaging magnification m. As long as the flow rate of the axial core is obtained, the average flow rate can be calculated by means of the same technique as that of the first embodiment.

The average flow rate calculated by the flow rate calculation section 151e is output to the flow volume calculation section 151f. The flow volume calculation section 151f inputs the spatial frequency spectral of the image pickup images at time t1 from the spatial frequency analysis section 151c and calculates (integrates) the product sum of the intensity of the spatial frequency spectral with respect to the spatial frequency. As mentioned earlier, because the intensity of the spatial frequency spectral corresponds to the integrated value of the amplitudes of the respective luminance waves, the integrated value of the intensity is a value that corresponds to the scattered light amount that enters the CCD line sensor 42. That is, by integrating the intensity of the spatial frequency spectral, the total amount of scattered light entering the CCD line sensor 42 can be obtained.

As mentioned in the second embodiment, there is an unambiguous relationship between the scattered light amount scattered in the translucent duct 10 and the density of the unsaturated fluid flowing in the translucent duct 10. Hence, the flow volume calculation section 151f is able to estimate the density of the unsaturated fluid flowing in the translucent duct 10 by taking the integrated value of the intensity of the spatial frequency spectral as an index value. For example, the relationship between the integrated value of the intensity and the density of the unsaturated fluid is examined beforehand by means of an experiment, a table or the like is prepared, and the density of the unsaturated fluid can be estimated by referencing the table. As long as the density of the unsaturated fluid can be estimated, the average flow volume from time t1 to time t5 can be specified by multiplying the density by the average flow rate.

(4) Summary:

As described hereinabove, Based on the reality that even when a fluid is uniform and does not appear to produce scattered light, there are no fluids that are actually homogeneous and in which particles with different properties do not exist, when laser light is made to pass through a translucent duct and condensed to extend in the length direction in an axial core area of a predetermined region of the transmission path, image pickup can be performed by the CCD line sensor 42 as a result of scattered light being produced by particles with different properties in the axial core area and a velocity component that uses a spatial filter can be computed by performing a predetermined operation. Moreover, the average flow rate and flow volume and so forth can be determined on the basis of the laminar flow in the translucent duct 10.

**Claims**

1. A fluidized state observing device for observing a fluidized state of a fluid flowing in a duct, comprising:

   a translucent duct;
   projection light irradiation means for irradiating projection light;
   projection light condensing means for condensing the projection light along a length direction with respect to an axial core area of the translucent duct; and
   axial core image pickup means for picking up images of scattered reflected light from an axial core area of the translucent duct cyclically while contrast-enhancing the scattered reflected light in predetermined positions in the length direction.

2. The fluidized state observing device according to claim 1, further comprising computation means for calculating a flow rate of the fluid on the basis of the image pickup images at a plurality of times.

3. The fluidized state observing device according to claim 2, wherein the fluid is a saturated fluid that flows in the duct and the flow volume of the saturated fluid is calculated on the basis of the flow rate and a cross-sectional area of the duct.

4. The fluidized state observing device according to claim 2, wherein the fluid is an unsaturated fluid that flows in the duct and the flow volume of the unsaturated fluid is calculated on the basis of the flow rate and an attenuation volume of the transmitted light that is transmitted via the translucent duct.

5. The fluidized state observing device according to claim 2, wherein the fluid is an unsaturated fluid that flows in the duct and the flow volume of the unsaturated fluid is calculated on the basis of the flow rate and the scattered light amount scattered by the translucent duct.

6. The fluidized state observing device according to any of claims 1 to 5, wherein the projection light irradiation means comprises a semiconductor laser and a Pulse Width Modulation (PWM) control circuit that controls an output of the semiconductor laser.

7. The fluidized state observing device according to any of claims 1 to 6, wherein the axial core image pickup means comprises a Charge Coupled Device (CCD) line sensor.

8. The fluidized state observing device according to claim 7, wherein the computation means applies a spatial frequency filter to the image pickup images picked up by the CCD line sensor.

9. The fluidized state observing device according to claim 7 or 8, wherein the computation means applies a predetermined weighting function to outputs of the respective image pickup elements of the CCD line sensor.

10. The fluidized state observing device according to claim 9, wherein the computation means applies a sine function as the weighting function.

11. The fluidized state observing device according to claim 9, wherein the computation means applies a rectangular wave function as the weighting function.

12. The fluidized state observing device according to any of claims 1 to 11, wherein image pickup is performed by mixing particles of different optical properties that increase the reflected light of the projection light with the fluid.

13. The fluidized state observing device according to any of claims 1 to 12, wherein the axial core image pickup means is disposed in a direction in which a reflected light component from the translucent duct is large.

14. The fluidized state observing device according to any of claims 1 to 13, further comprising output means for outputting an image in which the image pickup images of each time cycle of the axial core image pickup means can be compared.

15. The fluidized state observing device according to any of claims 2 to 14, wherein the computation means further comprises:

spatial frequency analysis means for acquiring image pickup images picked up by the CCD line sensor that are picked up at different times and for acquiring a spatial frequency spectral that relates to the axial core direction of the image pickup images while moving the image pickup images relatively in the axial core direction; and flow rate calculation means for calculating the flow rate of the fluid on the basis of a relative movement amount of the image pickup images when a correlation between the image pickup images and the spatial frequency spectral is strengthened.

16. The fluidized state observing device according to claim 15, wherein the spatial frequency analysis means multiplies a window function obtained by shifting the relative position in the axial core direction with respect to the image pickup images.

17. The fluidized state observing device according to claim 16, wherein the spatial frequency analysis means applies a sine function as the window function.

18. The fluidized state observing device according to any of claims 15 to 17, wherein the fluid is an unsaturated fluid that flows in the duct and the flow volume of the unsaturated fluid is estimated on the basis of an index value obtained by multiplying together a value obtained by integrating the intensity of the spatial frequency spectral and the flow rate.

19. A fluidized state observing method for observing a fluidized state of a fluid flowing in a duct, comprising the steps of:

condensing projection light at an axial core of a translucent duct; and
performing image pickup on an axial core area cyclically in a length direction.

Fig. 1

EP 1 862 780 A1

Fig. 2

Fig. 3

FLOW RATE IN A DUCT

Fig. 4

Fig. 5

Fig. 6

EP 1 862 780 A1

Fig. 7

Fig. 8

Fig. 9

POSITION [x]

←

t1

WINDOW FUNCTION

MOVEMENT AMOUNT ↓

t5 (MOVEMENT AMOUNT 0)

tt5 (MOVEMENT AMOUNT 1) →

t5 (MOVEMENT AMOUNT 2) → →

t5 (MOVEMENT AMOUNT 3) → → →

tt5 (MOVEMENT AMOUNT 4) → → → →

t5 (MOVEMENT AMOUNT 5) → → → → →

t5 (MOVEMENT AMOUNT 6) → → → → → →

Fig. 10

EP 1 862 780 A1

23

SPATIAL FREQUENCY SPECTRAL

INTENSITY

SPATIAL FREQUENCY [cycle/cm]

Fig. 11

| **INTERNATIONAL SEARCH REPORT** | International application No. |
|---|---|
| | PCT/JP2005/024074 |

A.    CLASSIFICATION OF SUBJECT MATTER
*G01F1/704*(2006.01), *G01P5/20*(2006.01)

According to International Patent Classification (IPC) or to both national classification and IPC

B.    FIELDS SEARCHED

Minimum documentation searched (classification system followed by classification symbols)
*G01F1/00-9/02*(2006.01), *G01P5/18-5/20*(2006.01)

Documentation searched other than minimum documentation to the extent that such documents are included in the fields searched
        Jitsuyo Shinan Koho            1922-1996   Jitsuyo Shinan Toroku Koho   1996-2006
        Kokai Jitsuyo Shinan Koho    1971-2006   Toroku Jitsuyo Shinan Koho   1994-2006

Electronic data base consulted during the international search (name of data base and, where practicable, search terms used)

C.    DOCUMENTS CONSIDERED TO BE RELEVANT

| Category* | Citation of document, with indication, where appropriate, of the relevant passages | Relevant to claim No. |
|---|---|---|
| A | JP 8-285648 A  (Toshiba Corp.),<br>01 November, 1996 (01.11.96),<br>Full text; all drawings<br>(Family: none) | 1-19 |
| A | JP 3-56826 A  (Mitsubishi Heavy Industries, Ltd.),<br>12 March, 1991 (12.03.91),<br>Full text; all drawings<br>(Family: none) | 1-19 |
| A | JP 57-197473 A  (Mitsubishi Heavy Industries, Ltd.),<br>03 December, 1982 (03.12.82),<br>Full text; all drawings<br>(Family: none) | 1-19 |

|  | Further documents are listed in the continuation of Box C. |  | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
|     16 February, 2006 (16.02.06) |     28 February, 2006 (28.02.06) |

| Name and mailing address of the ISA/ | Authorized officer |
|---|---|
|     Japanese Patent Office | |
| Facsimile No. | Telephone No. |

Form PCT/ISA/210 (second sheet) (April 2005)